# EUROPÄISCHE PATENTSCHRIFT

(11) **EP 0 741 654 B1**
(45) Veröffentlichungstag und Bekanntmachung des Hinweises auf die Patenterteilung: **18.06.1997**
(21) Anmeldenummer: 95906989.9
(22) Anmeldetag: 25.01.1995
(51) Int. Cl.: B62D 55/21

(54) **ELASTISCHE LAGERUNG FÜR KETTENBOLZEN IN GLEISKETTEN**
ELASTIC BEARING FOR TRACK PINS IN CRAWLER CHAINS
PALIER ELASTIQUE POUR BOULONS DE CHENILLES

(30) Priorität: 01.02.1994 DE 4402946
(43) Veröffentlichungstag der Anmeldung: 13.11.1996
(73) Patentinhaber: Diehl Remscheid GmbH & Co., D-42857 Remscheid (DE)
(72) Erfinder: WIESNER, Hagen, Heinz, D-42719 Solingen (DE); SPIES, Klaus, D-42857 Remscheid (DE)
(74) Vertreter: Hofmann, Gerhard, Dipl.-Ing. Patentassessor
(86) Internationale Anmeldenummer: EP9500258
(87) Internationale Veröffentlichungsnummer: WO9521089

(56) Entgegenhaltungen:
- US-A- 2 391 907
- US-A- 4 892 365

## Beschreibung

Die Erfindung bezieht sich auf eine elastische Lagerung für Kettenbolzen in Gleisketten nach dem Oberbegriff des Anspruchs 1.

Bekannterweise werden bei Gleiskettenfahrzeugen Scharnierketten mit Gummilagerungen eingesetzt entsprechend der US-PS 4,195,887. In gummierten Stahlbuchsen sind Kettenbolzen eingeschoben. Der Kettenbolzen und die Stahlbuchse weisen im Querschnitt ein Sechskant- oder Achtkant-Profil oder eine andere Form auf, um einen Formschluß zwischen Buchse und Kettenbolzen in Umfangsrichtung und die richtige Montagelage der Kettenglieder zueinander zu gewährleisten.
An den Bolzenenden der Kettenbolzen können Gewindeansätze vorgesehen sein, so daß mittels Muttern die Stahlbuchsen bewegungsfrei gegeneinander verspannt sind.
Diese bewegungsfreie Verspannung ist notwendig, damit es im Fahrbetrieb nicht zum Ausschlagen des Bolzens oder der Buchsen kommt.
Bei Verbinderketten mit gummierten Stahlbuchsen und darin eingeschobenen Kettenbolzen sind auch die Verbindungsteile bewegungsfrei über Stahlbuchsen verspannt. Hierdurch wird ein Ausschlagen der Verbindungsteile und Kettenbolzen vermieden.

Bei einer Scharnierkette für Fahrzeuge gemäß der DE-B-1 085 433 ist es bekannt, Kettenbolzen in gummierten Metallbuchsen zu lagern. Die Kettenbolzen können einen kreisförmigen Querschnitt aufweisen, als profilierte Sechskantbolzen oder als genutete Kettenbolzen ausgebildet sein. Die Buchsen der Gummiblockhülsen sind einstückig ausgeführt, d. h. sie weisen keine Teilungsfuge auf.
Die Gummiblöcke sind mit den Buchsen durch Vulkanisation verbunden. Gegen axiales Verschieben der Kettenbolzen in ihrer Achsrichtung sind die Buchsen an den Enden der Kettenbolzen umgebördelt. Nachteilig ist grundsätzlich, daß die Kettenbolzen in den Buchsen weder in radialer noch in axialer Richtung verspannt sind, d. h., die Kettenbolzen weisen keine Vorspannung gegenüber den Buchsen auf. Dadurch kommt es zu einem hohen Verschleiß durch Ausschlagen der Kettenbolzen oder Buchsen. Diese Art der Lagerung von Kettenbolzen hat sich nicht durchgesetzt.

Die Gummilagerungen der heute eingesetzten, gummigelagerten Scharnierketten sind besonders verschleißanfällig. Es ist daher die Aufgabe der Erfindung, die Nutzungsdauer der Gummilagerungen zu verbessern.

Die Erfindung löst diese Aufgabe entsprechend den kennzeichnenden Merkmalen des Anspruches 1.

Vorteilhafte Weiterbildungen der Erfindung sind den Unteransprüchen zu entnehmen.

Nach dem Anspruch 1 erhält der Kettenbolzen den nötigen Festsitz durch die vorgespannte Gummilagerung über eine Buchse mit wenigsten einer Teilungsfuge in deren Längsrichtung. Die Buchse wird durch Vulkanisation mit den bekannten Gummiringen gummiert und anschließend in die Bohrungen des Kettengliedkörper eingepreßt. Die Gummiringe erhalten dadurch den größten Teil ihrer Vorspannkraft. Im eingepreßten Zustand ist der Schlitz beziehungsweise sind die Schlitze durch den Druck der verspannten Gummiringe geschlossen. Der Durchmesser des Kettenbolzens weist gegenüber der lichten Weite der eingepreßten Buchse ein Übermaß auf. Durch das Einschieben des Kettenbolzens erhält die Gummilagerung daher ihre endgültige, gewollte Vorspannkraft. Diese Vorspannkraft wirkt als Reaktionskraft auf den Kettenbolzen und verspannt diesen im Buchsensitz.

Andererseits ist der spezifische Flächendruck der Gummiringe an der Innenwand der Bohrungen des Kettenkörpers so groß, daß Schwenkbewegungen des Kettenbolzens in der Gummilagerung abgefangen werden, ohne daß die Gummilagerung in der Bohrung des Kettenkörpers durchrutscht.

Die Verspannung des Kettenbolzens über die Gummilagerung ist so bemessen, daß einerseits der Kettenbolzen noch einschiebbar, d. h., montierbar und demontierbar ist.
Andererseits ist der Festsitz des Kettenbolzens in den Buchsen gewährleistet, damit im Fahrbetrieb ein Ausschlagen dieser Bauteile nicht erfolgt.

Ein seitliches Verschieben von ein- oder mehrteiligen Kettenbolzen in den Buchsen kommt durch den, von den Buchsen ausgeübten Anpreßdruck nicht vor. Als zusätzliche Sicherungen gegen seitliches Verschieben sind nach dem Anspruch 7 bei ein- oder mehrteiligen Kettenbolzen in Scharnierketten und bei ein- oder mehrteiligen Kettenbolzen in Verbinderketten Formschlußmittel vorgesehen. Diese greifen in Form von Sicken oder Zungen in entsprechende Ausnehmungen oder an Flächen der Kettenbolzen ein bzw. an. Die Sicken oder Zungen sind Bestandteile der Buchsen.

Bei mehrteiligen Kettenbolzen in Verbinderketten mit zwei oder mehreren Verbindungselementen werden die Kettenbolzen durch auf den Kettenbolzen zu verspannende, einteilig ausgeführte Verbinder gesichert.

Zwischen den Kettenbolzen und den Verbindern besteht je nach Formgestaltung der Kettenbolzen beziehungsweise der Verbinder ein Form- und/oder Kraftschluß.

In Abhängigkeit von der jeweiligen Querschnittsform eines Kettenbolzens weisen die Buchsen verschiedene Profile auf. Außer den bekannten Achtkant- und Sechskantprofilen können Buchsen mit Poligonprofilen sowie verschiedenen Lagen der Teilungsfugen angewendet werden.

Die Buchsen sind mit einer gleichen Wanddicke ausgeführt, was die kostengünstige Herstellung durch Umformung von Blech- oder Flachprofilen ermöglicht. Die Anwendung eines Rundprofiles der Buchse setzt voraus, daß die Verspannung des Kettenbolzens so ausgeführt ist, daß der Kettenbolzen beim Durchfahren der Drehwinkel des Gummilagers nicht in der Buchse durchrutscht.

Neben der bekannten Ausführung des Kettenbolzens in einem Stück kann dieser zur Kostenreduzierung und Montageerleichterung aus mehreren einzelnen, gleich- oder unterschiedlich langen Bolzenabschnitten bestehen.

Mit der Erfindung wird bei gummigelagerten Scharnierketten eine wesentliche Vergrößerung der tragenden Gummi-Lagerfläche durch Nutzung des bisher für die Muttern an den Bolzenenden verwendeten Bauraumes erreicht. Dadurch ergibt sich die höhere Nutzungsdauer der Gummilagerung.

Bei Verbinderketten, bei denen gummierte Kettenbolzen in Bohrungen des Kettengliedkörpers lagern und Verbindungselemente die Verbindung der einzelnen Kettenglieder zueinander herstellen, sind üblicherweise die außenliegenden Verbindungselemente einteilig und die innenliegenden zweiteilig und mit einer Spannschraube versehen. Durch Verspannen der Verbindungselemente auf den Kettenbolzen benachbarter Kettenglieder wird eine bewegungsfreie Verbindung hergestellt und die Bewegung benachbarter Kettenglieder ausschließlich von den Gummilagern der Kettenbolzen übernommen.
Um die Anzahl von Teilen eines Kettengliedes zu reduzieren, Kosten zu mindern, die Betriebssicherheit zu erhöhen, den Wartungsaufwand zu verringern und die Handhabung zu vereinfachen, wird anstelle des gummierten Kettenbolzens die erfindungsgemäße, gummierte Buchse vorgeschlagen, die in Längsrichtung wenigstens eine Teilfuge aufweist und in die der Kettenbolzen eingeschoben wird.
Nachdem die lichte Weite der unverspannten Buchse kleiner ist, als der Durchmesser des Kettenbolzens, spreizt der eingeschobene Kettenbolzen die im Kettenglied eingepreßte Buchse auf. Dabei wird der Kettenbolzen in der Buchse verspannt und in seiner Längsrichtung durch Reibschluß bzw. Umfangsrichtung durch Reib- und/oder Formschluß festegelegt. Durch diese feste Verbindung zweier Kettenbolzen in zwei benachbarten Kettengliedern entfallen die außenliegenden, verschraubten Verbindungselemente.
Bei Kettengliedern mit mehr als zwei Verbindungselementen können die innenliegenden Verbindungselemente einteilig ausgeführt werden, wodurch die Sicherheit wesentlich erhöht wird. Hierdurch ist es möglich, Kettenglieder mit nur zwei Verbindungselementen ohne Verschraubungen herzustellen. Bei mehr als zwei Verbindungselementen sind nur auf den innenliegenden Verbindungselementen Verschraubungen erforderlich.

Erfindungsgemäß entfallen Wartungsarbeiten an der Lagerung des Kettenbolzens von Scharnierketten, da ein ständiges Nachziehen der Verschraubungen für die Verspannung der Buchsen entfällt.
Dies gilt auch für Verbinderketten bis zu einer gewissen Kettenbreite ohne Verschraubungen.
Weiterhin wird die Anzahl der Bauteile der Kette durch Wegfall z. B. von Schrauben und Muttern sowie losen Verbindungselementen reduziert. Es liegt deshalb Wartungsfreiheit vor.

Darüberhinaus wird durch die Erfindung die Sicherheit von Verbinderketten mit mehr als zwei Verbindungselementen wesentlich dadurch erhöht, daß alle Verbindungselemente geschlossen, d. h., einstückig beziehungsweise einteilig ausgeführt werden können.

Ein Ausbau der Kettenbolzen und Trennung der Kettenglieder ist auch nach langzeitigem Einsatz ohne Erschwernis möglich, da sich der Kettenbolzen in der elastisch gelagerten und geteilten oder geschlitzten Buchse unter der Einwirkung von Korrosion und eingedrungenem Schmutz leichter losbrechen und verschieben läßt, als in einer ungeteilten, den Kettenbolzen starr umfassenden Buchse.

Auch ist nach Ausbau des Kettenbolzens ein sicheres Trennen der Scharnierkettenglieder möglich. Denn die erfindungsgemäßen Buchsen sind gegenüber geschlossenen Buchsen in ihrer Länge reduziert, so daß durch eventuelles Setzen des Gummilagers auftretende axiale Verschiebungen der Buchsen keine Behinderung beziehungsweise Sperrung bei der Demontage auftritt. Ein Setzen des Gummilagers ergibt sich durch lange Betriebsdauer und hohe Belastung im Fahrbetrieb der Scharniergleiskette.

Nachdem die Buchsen bei Scharnierketten nicht über Verschraubungen verspannt werden, ist die Wanddicke gegenüber der bisherigen Ausführung erheblich reduziert. Als Werkstoff eignet sich ein üblicher Massenstahl oder ein entsprechendes anderes Material. Die Folge sind Gewichts- und Kostenersparnis.

Ausführungsbeispiele der Erfindung sind in der Zeichnung dargestellt. Es zeigt:
- Fig. 1: einen Querschnitt eines Kettengliedes mit Lagerungen für Kettenbolzen,
- Fig. 2-5: verschiedene Profile von Buchsen und Kettenbolzen,
- Fig. 6: einen Schnitt VI - VI nach Figur 7, wobei zwei Bolzenabschnitte von Kettenbolzen in einer Bohrung eines Kettengliedes im Längsschnitt dargestellt sind,
- Fig. 7: einen Abschnitt einer Scharnierkette,
- Fig. 8: einen Abschnitt einer Verbinderkette,
- Fig. 9: einen Schnitt VIII - VIII durch einen Verbinder nach Fig. 8,
- Fig. 10: ein Segment einer Scharnierkette,
- Fig. 11: einen Abschnitt einer weiteren Verbinderkette,
- Fig. 12: einen Querschnitt durch zwei Verbinderkettenglieder mit Lagerungen für Kettenbolzen und zwei schraubenlosen Verbindungselementen,
- Fig. 13: einen Querschnitt durch zwei Verbinderkettenglieder mit Lagerungen für Kettenbolzen und Verbindungselementen,
- Fig. 14-16: verschiedene Ausführungen von außenliegenden Verbindungselementen und
- Fig. 17: eine weitere Bolzenlagerung einer Scharnierkette im Teilschnitt.

In einem Kettenglied 1 einer Gleiskette sind in Bohrungen 2,3 Gummilagerung 4,5 vorgesehen.

Eine Buchse 10 aus Stahl weist zwei Teilungsfugen 11 auf.
Jede Buchsenhälfte 12 besitzt am Außenumfang einen Kreisbogen und an der Innenseite entsprechend einem Achtkantprofil eines Kettenbolzens 20 ein entsprechendes Flächenprofil. Gummiringe 21 sind mit den Buchsenhälften 12 durch Vulkanisation fest verbunden.

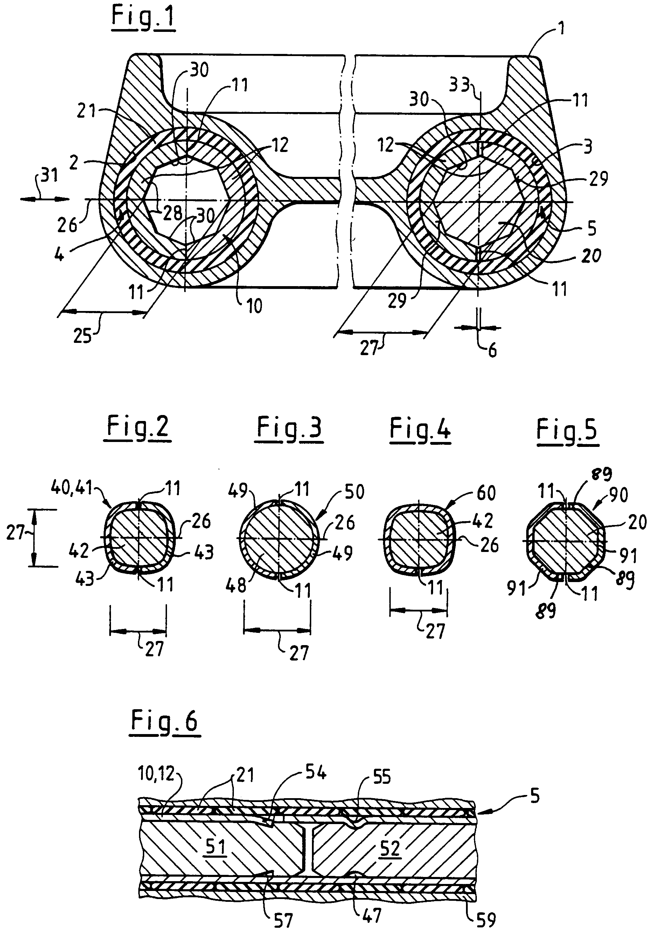

Bei der, in die Bohrung 2 eingepreßten Buchse 10 mit den Gummiringen 21 sind die Teilungsfugen 11 aufgrund des Druckes der verspannten Gummiringe 21 geschlossen, siehe die linke Bohrung 2 der Figur 1. Dabei ist die lichte Weite 25 in einer Hauptebene 26 des Kettengliedes 1 kleiner als der entsprechende Durchmesser 27 des Kettenbolzens 20. Die Länge der Innenkanten 28 entspricht den Längen der Außenkanten 29 des Kettenbolzens 20.
Demgegenüber sind die Innenkanten 30 entsprechend der lichten Weite 6 von etwa 0,5 - 1 mm (abhängig vom Durchmesser des Kettenbolzens 20) der Teilungsfuge 11 verkürzt.

Der Kettenbolzen 20 weist entsprechend seinem Durchmesser 27 gegenüber der lichten Weite 25 der Buchse 10 ein Übermaß auf. Dieses Übermaß liegt auch parallel und symmetrisch dazu in den weiteren Bolzenebenen vor. Durch das Einschieben des Kettenbolzens 20 in die Buchse 10 wird diese in Pfeilrichtung 31 auseinander getrieben. Dementsprechend ist die Gummilagerung 5 stärker verdichtet als die Gummilagerung 4, wobei die Gummilagerung 5 über ihren gesamten Umfang eine gleich hohe Verdichtung aufweist.

Die nach dem Einschieben des Kettenbolzens 20 auf diesen wirkende Vorspannkraft der Gummilagerung 5 verspannt diesen im Buchsensitz gemäß der rechtsliegenden Darstellung in Figur 1.

Die Buchsen 40, 50, 60, 90 nach den Fig. 2 - 5 sind in gleicher Wanddicke ausgeführt.

Entsprechend Figur 2 weist eine Buchse 40 ein Poligonprofil 41 auf, wobei zwei Teilungsfugen 11 vorgesehen sind.
Ein Kettenbolzen 42 mit einem entsprechenden Poligonprofil trägt die beiden Buchsenhälften 43.

Ein Rundbolzen 48 ist mit zwei entsprechenden Halbschalen 49 einer Buchse 50 mit den Teilungsfugen 11 gemäß Figur 3 versehen.

Abweichend zu Figur 2 ist in Figur 4 an einer Buchse 60 nur eine einzige Teilungsfuge 11 vorgesehen.

Nach Fig. 5 besteht die Buchse 90 aus zwei kantig ausgebildeten Halbschalen 91. Die Teilungsfugen 11 liegen in der Mitte der Achtkantflächen 89.

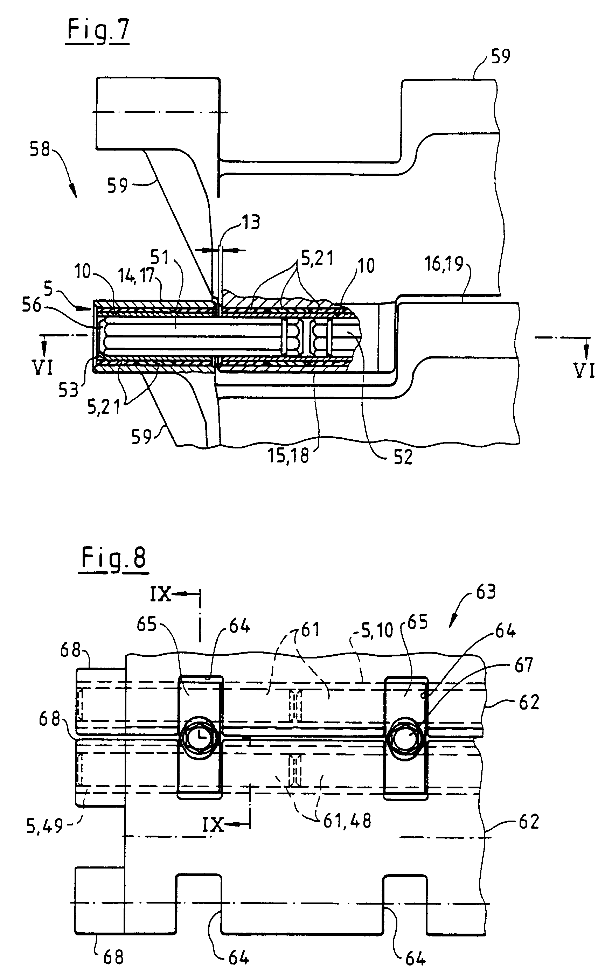

Bei einer Scharnierkette 58 mit Kettengliedern 59 nach Figur 7 sind anstelle eines einstückigen Kettenbolzens mehrere Bolzenabschnitte 51 in den gummierten Buchsen 10 angeordnet. Ein seitliches Herauswandern der Bolzenabschnitte 51 aus den Buchsen 10 wird nach Figur 6 und 7 durch jede der Sicherungen 53 bis 55 verhindert. Die Sicherungen bestehen aus Zungen 53, 54, die aus der Buchse 10 herausgestanzt sind. Die Zunge 53 liegt am Konus 56 des Bolzenabschnitts 51 an. Die Zunge 54 greift in eine sägezahnförmige Nut 57 des Bolzenabschnittes 51 ein.
Andererseits legt die Sicke 55 den Bolzenabschnitt 52 durch formschlüssigen Eingriff in eine entsprechende Nut 47 des Bolzenabschnittes 52 fest.

Nach Ausbau der Bolzenabschnitte 51, 52 ist ein sicheres Trennen der Kettenglieder 59 - auch nach längerer Gebrauchsdauer der Scharnierkette 58 - ohne weiteres möglich. Denn die geteilten Buchsen 10 sind kürzer (Abstand 13) als die Breite 14 bis 16 der Scharnieraugen 17 bis 19. Durch eventuelles Setzen der Gummilagerung 5 auftretende Längsverschiebungen der Buchsen 10 bewirken keine Behinderung beziehungsweise Sperrung bei der Demontage der Scharnierkette 58.

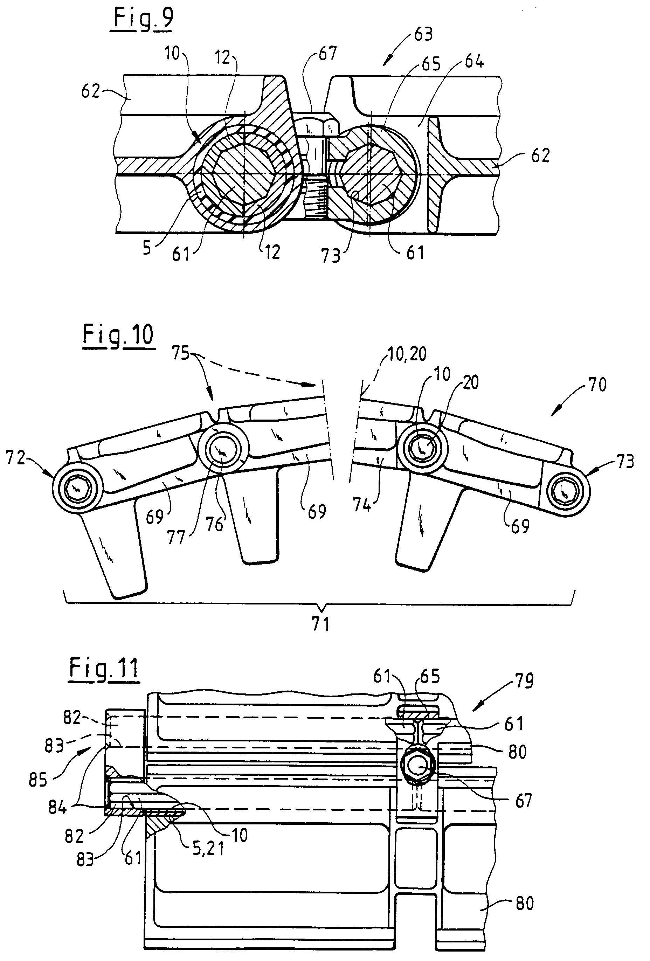

Nach den Fig. 8, 9 sind Bolzenabschnitte 61 in den gummierten Buchsen 10 aus Stahl eingedrückt, wobei diese gemäß Fig. 1 in Kettengliedern 62 einer Verbinderkette 63 eingepreßt sind. Die Kettenglieder 62 weisen einander gegenüberliegende Ausnehmungen 64 für einteilige, verspannte Verbinder 65 auf. Die Schraubverbindung ist mit 67 bezeichnet. Die Verbinder 65 besitzen achtkantige Ausnehmungen 73. Sie klemmen über die Schraubverbindung 67 unmittelbar die Bolzenabschnitte 61 drehfest. Lageraugen 68 vergrößern die Lagerlänge der Bolzenabschnitte 61.

Nach Fig. 10 sind mehrere Kettenglieder 69, 73 einer Scharnierkette 70 zu einem Segment 71 montiert. Mehrere, miteinander verbundene Segmente 71 bilden einen nicht dargestellten Kettenstrang für ein Fahrzeug. Zur Verbindung von Segmenten 71 sind Schließstellen 72, 73 jeweils mit der geteilten Buchse 10 und dem achtkantigen Kettenbolzen 20 versehen. Damit wird die richtige Montagelage zweier benachbarter Segmente 71 erreicht. Die übrigen Scharniergelenke 75 sind mit gummierten Rundbolzen 76 versehen. Gummiringe 77 sind auf Rundbolzen 76 aufvulkanisiert.

Um die Möglichkeit zu schaffen, bei Kettenlängung ein Kettenglied einfach ausbauen zu können, wird ein zweites Kettenglied 74 hinter der Schließstelle 73 zweifach mit dem Kettenbolzen 20 und mit der geteilten Buchse 10 ausgestattet.

Andererseits kann bei einer Scharnierkette oder einer Verbinderkette der gesamte Kettenstrang mit gummierten, vorzugsweise Rundbolzen 76, die in die Bohrungen 2 (Fig. 1) eingepreßt werden, durch Werksmontage ausgestattet sein. Geliefert wird damit ab Werk ein kompletter Kettenstrang.

Lediglich die Schließstelle ist entsprechend der Schließstelle 72 nach Fig. 9 mit geteilter Buchse 10 und dem Kettenbolzen 20 ausgestattet. Der Kettenbolzen 20 wird mittels einer nicht dargestellten Vorrichtung eingepreßt und so der Kettenstrang geschlossen.

Auch die Schließstellen einer Bandkette können mit der geteilten Buchse 10 und den Kettenbolzen 20 versehen sein.

Nach Fig. 11 sind bei einer Verbinderkette 79 Kettenglieder 80 durch schraubenlose Verbindungselemente 85 sowie durch den geschlossenen, verschraubten Mittenverbinder 65 miteinander verbunden. Außenliegende Verbinder 81 sind mit freien Enden 82 der Bolzenabschnitte 61 durch Schweißnähte 84 unlösbar verbunden. Die Verbinder 81 sind mit runden oder achtkantigen Öffnungen 83 versehen. Als weitere Verbindungsarten kommen neben Schweißen auch Verlöten oder Verpressen in Frage.

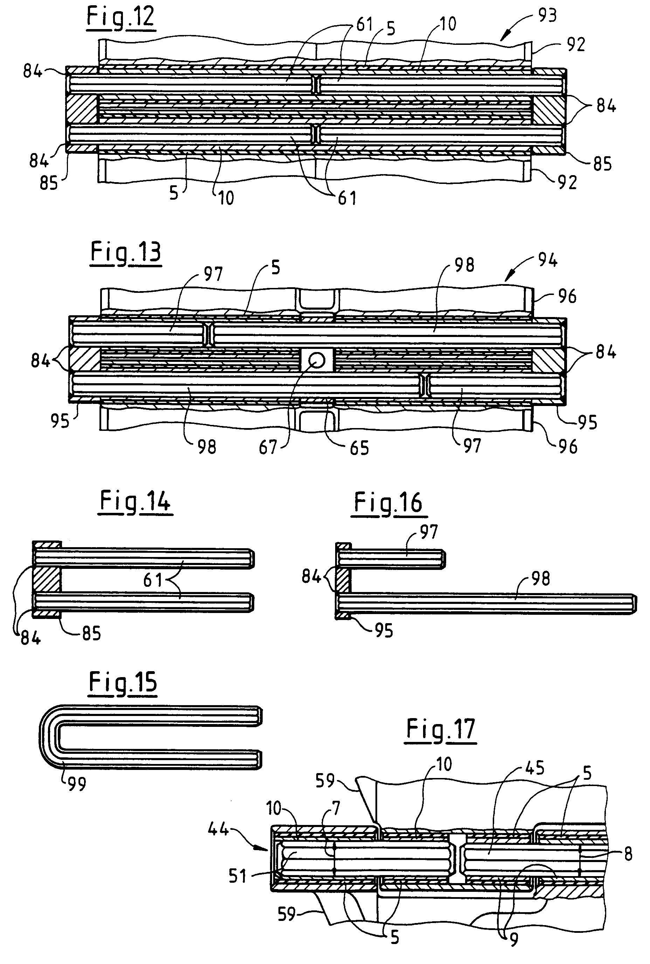

Nach Fig. 12 sind zwei Kettenglieder 92 einer Verbinderkette 93 durch die schraubenlosen Verbindungselemente 85 nach Fig. 11 miteinander verbunden. Die gummierten Buchsen 10 befestigen die achtkantigen Bolzenabschnitte 61.

Eine demgegenüber höher beanspruchbare und auch breitere Verbinderkette 94 mit Kettengliedern 96 nach Fig. 13 besitzt ebenfalls schraubenlose Verbindungselemente 95 sowie den geschlossenen Mittenverbinder 65 mit Schraubverbindung 67. Die achtkantigen Bolzenabschnitte 97, 98 sind nach den Fig. 13 und 16 unterschiedlich lang.

Nach Fig. 15 besteht ein schraubenloses, gabelförmiges Verbindungselement 99 aus einem achtkantigen Stangenmaterial.

Nach Fig. 17 besteht eine Bolzenlagerung 44 von Kettengliedern 59 aus Buchsen 9, 10 mit unterschiedlichen Innendurchmessern 7, 8. In die Buchsen 9, 10 werden Bolzenabschnitte 45, 51 mit den entsprechenden Außendurchmessern eingedrückt. Der Innendurchmesser 7 der außenliegenden eingepreßten Buchse 10 liegt über dem Innendurchmesser 8 der innenliegenden Buchse 9.
Hierdurch ist eine Vereinfachung der Montage zu erreichen, in dem der dünnere Bolzenabschnitt 45 durch die äußeren Buchsen 10 mit Spiel durchgeschoben und dann in die inneren Buchsen 9 eingedrückt wird. Danach wird der dickere Bolzenabschnitt 51 in die Buchsen 10 eingedrückt.

Das Prinzip der geteilten Buchse ist anwendbar bei Verbinderketten mit drei Verbindern auf der Kettenbreite oder mit zwei Verbindern auf der Kettenbreite. Für Sonderfälle kann auch ein einziger Verbinder auf der Kettenbreite ausreichen.

Zur besseren Abstützung der Biegemomente können die Bolzenabschnitte 45, 51, 52, 61, 97, 98 ineinander verzapft sein, andererseits ist durch eine formschlüssige Verzapfung eine Sicherung gegen seitliches Herauswandern der Bolzenabschnitte 51, 52, 61 aus den Kettengliedern gegeben.

## Patentansprüche

1. Elastische Lagerung für Kettenbolzen (20) in Gleisketten (58, 63) mit einer, in einer Bohrung (2,3) eines Kettengliedes (1) angeordneten, auf einer Buchse (10) sitzenden, vorgespannten Gummilagerung (5), wobei der Kettenbolzen (20) die Buchse (10) trägt,
dadurch gekennzeichnet,
daß die Buchse (10) in Längsrichtung wenigstens eine Teilungsfuge (11) aufweist,
und die lichte Weite (25) der in der Bohrung (2,3) des Kettengliedes (1) in der Gummilagerung (5) angeordneten Buchse (10) kleiner ist als der Durchmesser (27) des Kettenbolzens (20).

2. Lagerung nach Anspruch 1,
dadurch gekennzeichnet,
daß die Buchse (10) mit der Gummilagerung (4, 5, 21) durch Vulkanisation fest verbunden ist.

3. Lagerung nach Anspruch 1,
dadurch gekennzeichnet,
daß die lichte Weite (25) der Buchse (10) - gemessen in der Hauptebene (26) des Kettengliedes (1) - kleiner ist als der Durchmesser (27) des Kettenbolzens (20; 42; 48; 51, 52; 61; 97 - 99).

4. Lagerung nach Anspruch 1,
dadurch gekennzeichnet,
daß die Buchse (10) ein- oder mehrteilig ausgebildet ist.

5. Lagerung nach Anspruch 1,
dadurch gekennzeichnet,
daß der Umfang der Buchse (40, 50) kreisförmig oder als Polygon (41) ausgebildet ist und ihre Innenkontur der Querschnittsform des Kettenbolzens (20; 42; 48; 51, 52; 61; 97 - 99) entspricht.

6. Lagerung nach Anspruch 1,
dadurch gekennzeichnet,
daß die Kettenbolzen (20, 42, 48) aus einzelnen Bolzenabschnitten (51, 52, 61) bestehen.

7. Lagerung nach den Ansprüchen 1 oder 6,
dadurch gekennzeichnet,
daß die Kettenbolzen (20) oder Bolzenabschnitte (51, 52) Vertiefungen (47, 57) beziehungsweise Stirnflächen (Konus 56) aufweisen, in die wenigstens eine Zunge (54) oder Sicke (55) der Buchse (10) form und/oder kraftschlüssig eingreift bzw. hintergreift.

8. Lagerung nach Anspruch 1,
dadurch gekennzeichnet,
daß die Teilungsfuge (11) der Buchse (10, 40, 50, 60) in dem Kettenglied (1, 59, 62) außerhalb der Hauptebene (26) des Kettengliedes (1, 59, 62) liegt, in der die größten Kräfte während des Betriebes der Ketten (58, 63) wirken.

9. Lagerung nach Anspruch 1 bei einer Verbinderkette,
dadurch gekennzeichnet,
daß ein einteiliger, innenliegender Verbinder (65) den Kettenbolzen (20) beziehungsweise die Bolzenabschnitte (61) drehschlüssig festklemmt.

10. Lagerung nach Anspruch 1,
dadurch gekennzeichnet,
daß die außenliegenden Verbindungselemente (85, 95, 99) einteilig und gabelförmig ausgeführt sind.

11. Lagerung nach Anspruch 1,
dadurch gekennzeichnet,
daß die Durchmesser (7, 8) von aus einzelnen Bolzenabschnitten (45, 51) bestehenden Kettenbolzen unterschiedlich sind.

12. Verwendung der Lagerung nach den Ansprüchen 1 bis 11,
bei einer Scharnierkette, Verbinderkette oder Bandkette, bei denen nur die Schließstellen aus der gummierten Buchse (10) mit dem Kettenbolzen (20) bestehen.

## Claims

1. Elastic mounting for track pins (20) in caterpillar tracks (58, 63) with a prestressed rubber mounting (5) which is located in a bore (2, 3) of a track link (1) and seated on a bushing (10), the track pin (20) bearing the bushing (10),
characterized in that
the bushing (10) has at least one separating gap (11) in longitudinal direction,
and the inside diameter (25) of the bushing (10) located in the bore (2, 3) of the track link (1) in the rubber mounting (5) is smaller than the diameter (27) of the track pin (20).

2. Mounting according to Claim 1,
characterized in that
the bushing (10) is firmly connected with the rubber mounting (4, 5, 21) by vulcanization.

3. Mounting according to Claim 1,
characterized in that
the inside diameter (25) of the bushing (10) - measured on the principal plane (26) of the track link (1) - is smaller than the diameter (27) of the track pin (20; 42; 48; 51, 52; 61; 97 - 99).

4. Mounting according to Claim 1,
characterized in that
the bushing (10) is formed of one or more parts.

5. Mounting according to Claim 1,
characterized in that
the circumference of the bushing (40, 50) is designed in circular form or as a polygon (41) and its inner outline corresponds with the cross-sectional form of the track pin (20; 42; 48; 51, 52; 51; 97 - 99).

6. Mounting according to Claim 1,
characterized in that
the track pins (20, 42, 48) are made up of individual pin sections (51, 52, 61).

7. Mounting according to Claims 1 or 6,
characterized in that
the track pins (20) or pin sections (51, 52) have recesses (47, 57) or end faces (cone 56), in which at least one tongue (54) or bead (55) of the bushing (10) engages or catches in an interlocking and/or non-positive way.

8. Mounting according to Claim 1,
characterized in that
the separating gap (11) of the bushing (10, 40, 50, 60) in the track link (1, 59, 62) lies outside of the principal plane (26) of the track link (1, 59, 62) on which the greatest forces act during operation of the tracks (58, 63).

9. Mounting according to Claim 1 in the case of a connector track,
characterized in that
a one-piece connector (65) lying on the inside clamps the track pin (20) or respectively the pin sections (61) so that they are resistant to torsion.

10. Mounting according to Claim 1,
characterized in that
the connecting elements (85, 95, 99) lying on the outside are made in one piece in the form of a fork.

11. Mounting according to Claim 1,
characterized in that
the diameters (7, 8) of track pins comprising individual pin sections (45, 51) are variable.

12. Use of the mounting according to Claims 1 to 11, in the case of a hinged track, connector track or band track, in the case of which only the closure points comprise the rubberized bushing (10) with the track pin (20).

## Revendications

1. Suspension élastique pour axes de chenille (20) dans des chenilles (58, 63) avec une suspension en caoutchouc (5) précontrainte, disposée dans un perçage (2, 3) d'un maillon de chenille (1), placée sur une douille (10), l'axe de chenille (20) portant la douille (10),
caractérisée
en ce que la douille (10) presente dans la direction longitudinale au moins un joint de séparation (11), et l'ouverture intérieure (25) de la douille (10), placée dans le perçage (2, 3) du maillon de chenille (1), dans la suspension en caoutchouc (5), est inférieure au diamètre (27) de l'axe de chenille (20).

2. Suspension selon la revendication 1,
caractérisée
en ce que la douille (10) est assemblée fixement à la suspension en caoutchouc (4, 5, 21), par vulcanisation.

3. Suspension selon la revendication 1,
caractérisée
en ce que l'ouverture intérieure (25) de la douille (10)-mesurée dans le plan principal (26) du maillon de chenille (1) - est inférieure au diamètre (27) de l'axe de chenille (20 ; 42 ; 48 ; 51, 52 ; 61 ; 97 à 99).

4. Suspension selon la revendication 1,
caractérisée
en ce que la douille (10) est en une ou plusieurs parties.

5. Suspension selon la revendication 1,
caractérisée
en ce que le pourtour de la douille (40, 50) est circulaire ou polygonal (41) et son contour intérieur correspond à la forme de section transversale de l'axe de chenille (20 ; 42 ; 48 ; 51, 52 ; 61 ; 97 à 99).

6. Suspension selon la revendication 1,
caractérisée
en ce que les axes de chenille (20, 42, 48) sont constitués de portions d'axe (51, 52, 61) individuelles.

7. Suspension selon les revendications 1 ou 6,
caractérisée
en ce que les axes de chenille (20) ou portions d'axe (51, 52) présentent des creux (47, 57) ou des faces frontales (cône 56), dans lesquels au moins une languette (54) ou moulure (55) de la douille (10) s'engage ou passe derrière, par concordance de forme et/ou par force.

8. Suspension selon la revendication 1,
caractérisée
en ce que le joint de séparation (11) de la douille (10, 40, 50, 60) se situe dans le maillon de chenille (1, 59, 62), à l'extérieur du plan principal (26) du maillon de chenille (1, 59, 62), dans lequel agissent les plus grandes forces pendant le fonctionnement des chenilles (58, 63).

9. Suspension selon la revendication 1 dans une chaîne d'attache,
caractérisée
en ce qu'une attache (65) intérieure, d'une seule pièce, fixe par rotation l'axe de chenille (20) ou les portions d'axe (61).

10. Suspension selon la revendication 1,
caractérisée
en ce que les éléments de liaison (85, 95, 99) extérieurs sont réalisés d'une seule pièce et en forme de fourche.

11. Suspension selon la revendication 1,
caractérisée
en ce que les diamètres (7, 8) d'axes de chenille, constitués de portions d'axe (45, 51) individuelles, sont différents.

12. Utilisation de la suspension selon les revendications 1 à 11 dans une chaîne de charnière, chaîne d'attache ou chaîne à ruban, dans lesquelles seuls les points de fermeture sont constitués de la douille (10) caoutchoutée avec l'axe de chenille (20).
